Europäisches Patentamt

(19) European Patent Office

Office européen des brevets

(11) Veröffentlichungsnummer: **0 289 454**
**A2**

## (12) EUROPÄISCHE PATENTANMELDUNG

(21) Anmeldenummer: **88810058.3**

(22) Anmeldetag: **01.02.88**

(51) Int. Cl.⁴: **B 23 H 7/18**

(30) Priorität: **31.01.87 CH 334/87**

(43) Veröffentlichungstag der Anmeldung:
**02.11.88 Patentblatt 88/44**

(84) Benannte Vertragsstaaten: **ES**

(71) Anmelder: **REISHAUER AG.**
**Industriestrasse 36**
**CH-8304 Wallisellen (CH)**

(72) Erfinder: **Fenner, Hans-Ulrich**
**Unterwegli 9**
**CH-8404 Winterthur (CH)**

(74) Vertreter: **Punschke, Edgar Patentanwalt**
**Löwenstrasse 1**
**CH-8001 Zürich (CH)**

(54) Verfahren und Vorrichtung zur Steuerung des Bearbeitungsprozesses bei der Elektroerosion.

(57) Eine Funkenerosionsanlage mit Werkstückelektrode, Werkzeugelektrode, und einem dazwischen liegenden Arbeitsspalt, wird mit einem Prozessregler derart gesteuert, dass mindestens eine der Elektroden servogesteuert periodisch zugestellt und damit der Arbeitsspalt automatisch nachgestellt wird. Während der Zustellbewegung werden die zwischen beiden Elektroden (5,15) auftretenden Druckkräfte gemessen. Die sich ergebenden Messsignale werden im Prozessregler mit Technologie-bezogenen Verfahrensparametern ($V_b$) und mit der tatsächlichen Zustellgeschwindigkeit ($V_{servo}$) verknüpft. Aus dem Ergebnis werden Stellsignale ($V_x$, $V_y$, $V_n$) für die Servosteuerung der Elektrodennachführung abgeleitet. Die Stellsignale haben vorzugsweise die Form von vektoriellen Bahnbeschleunigungssignalen ($b1$). Die Druckkräfte können durch Sensoren (21) an an Teilen des Maschinenständers oder des Maschinenkopfes gemessen werden, an denen die elastische Deformation während des Betriebs der Maschine am grössten ist. Durch das Verfahren wird der Erosionsprozess besonders bei grossen Werkstücken stabil bzw. überhaupt erst aufrecht erhalten. Durch das Vermeiden von Schwingungen bei der Elektrodenzustellung wird der Wirkungsgrad des Erosionsprozesses verbessert.

Fig. 2

EP 0 289 454 A2

## VERFAHREN UND VORRICHTUNG ZUR STEUERUNG DES BEARBEITUNGSPROZESSES BEI DER ELEKTROEROSION

Die Erfindung betrifft ein Verfahren zur selbsttätigen Steuerung des Bearbeitungsprozesses in einer Funkenerosionsanlage, mit mindestens einer Werkstückelektrode und mindestens einer Werkzeugelektrode, gemäss dem Oberbegriff des Patentanspruchs 1. Die Erfindung betrifft ferner eine Funkenerosionsmaschine zur Ausführung des Verfahrens.

Das Funkenerosionsverfahren beruht auf einem physikalischen Effekt, der eine präzise Einstellung und Einhaltung der Verfahrensparameter voraussetzt. In der praktischen Anwendung bedeutet dies, dass aufwendige und häufig komplizierte Steuerungen mit Regelschaltungen verwendet werden, welche die Einhaltung der gewünschten Verfahrensparameter unter wechselnden Verfahrensbedingungen sicherstellen sollen.

Die gesamte Prozessregelung setzt sich grundsätzlich zusammen aus der Steuerung der von einem Generator gelieferten elektrischen Energie für die Entladung zwischen beiden Elektroden, der Regelung der Spülung im dazwischen liegenden Spalt und der elektromechanischen Servoregelung für die koordinatenorientierte Führung der Elektroden. Die vorliegende Erfindung befasst sich im engeren Sinn mit der Servo-unterstützten Positionsregelung zwischen der Werkzeugelektrode und der Werkstückelektrode.

Bei der zuletzt erwähnten Positionsregelung sind einige spezifische Besonderheiten des Funkenerosionsprozesses zu berücksichtigen. Der zwischen beiden Elektroden liegende Arbeitsspalt muss auf einen vorgegebenen Wert zwischen einigen Hundertstel bis einigen Zehntel Millimeter, vorzugsweise auf 0,2 bis 0,3 Millimeter, eingestellt werden, wobei dieser Wert die Oberflächenrauhigkeit am Werkstück wesentlich bestimmt. Der Arbeitsspalt ist mit einer Dielektrikumsflüssigkeit gefüllt, welche mehrere Aufgaben zu übernehmen hat: Elektrisch muss sie einen Isolator darstellen, damit sich die für die Funkenentladung notwendige Ionisierungsspannung zwischen den Elektroden aufbauen kann. Ausserdem muss das Dielektrikum den Spalt zur Ermöglichung weiterer Funkenentladungen sauberhalten, und zwar von bereits abgetragenen Erosionspartikeln und von Zersetzungsgasen, welche sich während der Entladung bilden. Schliesslich werden die Elektroden durch das strömende Dielektrikum auf konstanter Temperatur und damit massgenau gehalten, praktisch also gekühlt. Alle diese Vorgänge laufen gesteuert, unter Berücksichtigung vorgegebener Parameter ab, die teils maschinenbedingt und teils technologiebedingt sind.

Im Rahmen eines geeigneten Prozessreglers wird eine Gruppe von Betriebsparametern als "Steuergrössen" behandelt. Sie werden fortlaufend so nachgeführt, dass innerhalb der verschiedenen Bearbeitungsstufen, also z.B. während des Schruppens, des Vorschlichtens, oder des Feinschlichtens, der optimale Wirkungsgrad des Funkenerosionsprozesses sichergestellt wird.

Da die Prozessregelung eine grosse Anzahl von Verfahrensparametern in ihrer gegenseitigen Abhängigkeit berücksichtigen muss, wirken sich einzelne Störungen in der Regel unmittelbar auf den Gesamt-Prozessablauf und damit auf die Qualität der Erosion aus. So besteht z.B. eine beträchtliche Gefahr, dass durch Kurzschluss oder Störungen innerhalb des Arbeitsspaltes die Abtragsleistung und der Verschleiss an den Elektroden von den vorprogrammierten Werten abweichen. Dies kann zu unerwünschter Vergrösserung oder Verkleinerung des Arbeitsspaltes führen, woraus sich schliesslich Geometriefehler am Werkstück ergeben.

Sollen grössere Werkstücke mit einem entsprechend grossflächigen Arbeitsspalt zwischen den Elektroden bearbeitet werden, wird zur Sicherstellung eines sauberen Arbeitsspaltes und damit einwandfreier Erosionsbedingungen der Arbeitsspalt periodisch kurzzeitig vergrössert und anschliessend wieder auf dasjenige Mass gebracht, welches zu den gewünschten Entladungsbedingungen führt. Erreicht wird die periodische Spaltveränderung durch zeit-gesteuertes Abheben und Zustellen der Werkzeugelektrode, da diese in der Regel das geringere Gewicht aufweist und somit leichter zu führen ist als das Werkstück. Es ist aber grundsätzlich auch eine periodische Verstellung des Tisches mit darauf befindlichem Werkstück möglich. Dabei wird die Erosion durch eine entsprechende Steuerung erst dann wieder in Gang gesetzt, wenn die Werkzeugelektrode die als Parameter vorgegebene Arbeitsspalttiefe erreicht hat, und nicht schon bei Annäherung an seitliche Kanten am Werkstück, da dies zu unerwünschten Verrundungen führen würde.

Die erwähnte periodische Veränderung des Arbeitsspaltes hat erhebliche Pumpbewegungen des Dielektrikums zur Folge. Abhängig von der Viskosität des Dielektrikums kann bei grösseren Werkstücken bzw. bei grossflächigem Arbeitsspalt die Dielektrikum-flüssigkeit eine erhebliche mechanische Dämpfung der Abhebe- und Zustellbewegung bewirken. Diese Bewegungsdämpfung kann im Extremfall dermassen stark sein, dass der Verfahrensablauf nicht mehr unter allen Bedingungen in der gewünschten Weise durch den Prozessregler zu steuern ist.

Als Folge davon tritt eine zusätzliche Nebenerscheinung auf, welche den Prozessablauf erheblich stören kann. Während des Zustellens der Elektrode wird die Erosionsenergie erst dann wieder voll eingeschaltet, wenn die Distanz der Elektrode dem voreingestellten idealen Arbeitsspalt entspricht. Nun bleibt aber, bedingt durch die Elastizität des Maschinengestells, die Elektrode nicht in dieser Position, sondern sie wird unter der Wirkung des sich elastisch entspannenden Maschinengestells weiter an die Werkstückelektrode herangeführt, so dass sich der Arbeitsspalt zusätzlich verengt. Dies kann zu Kurzschlussbedingungen führen, so dass die Regelschaltung des Generators die Erosionsenergie sofort wieder abschaltet. Im Extremfall führt dies zu Schwingungen der Elektrode, ohne dass eine nennenswerte Erosionsleistung erfolgt, so dass der gewünschte Materialabtrag nicht erreicht wird. Es bleibt der Geschicklichkeit des Bedienungspersonals überlassen, die Maschine durch manuelles Eingreifen aufzufangen und wieder zu normalen Erodierbedingungen zurückzuführen, sofern dies überhaupt noch möglich ist.

Zur Vermeidung des Pumpeffektes werden gelegentlich sogenannte Entlastungsbohrungen in der Werkstück- bzw. Werkzeugelektrode vorgesehen, mit deren Hilfe der Druck- bzw. Strömungsausgleich der Dielektrikumsflüssigkeit gefördert werden soll. Solche Entlastungsbohrungen sind jedoch nicht an allen Werkstücken zu tolerieren, insbesondere nicht an Spritzgussformen für Kunststoffteile, da solche Spritzgussformen naturgemäss druckfest sein müssen.

Es ist Aufgabe der vorliegenden Erfindung, das Verfahren der eingangs definierten Art sowie eine entsprechende Funkenerosionsmaschine dahingehend weiter zu entwickeln, dass auch bei grösseren Werkstücken bzw. Werkzeugelektroden der Erosionsprozess unter allen gewünschten Bedingungen beherrschbar bleibt und im Sinn einer möglichst effektiven und präzisen Erosionswirkung automatisch gesteuert werden kann.

Diese Aufgabe wird erfindungsgemäss durch die in den Patentansprüchen definierten Massnahmen gelöst.

Der Vorteil dieser Massnahmen liegt insbesondere darin, dass die bei grösseren Werkstück- bzw. Werkzeugelektroden vom erwähnten Pumpeffekt ausgehenden Kräfte während der Relativbewegung der beiden Elektroden messtechnisch erfasst und in den Regelungsprozess für die Elektrodenführung, insbesondere über die Regelung der Geschwindigkeit für die Zustellung der Elektrode, einbezogen werden.

Besonders zweckmässig ist dabei die Elektrodennachführung über eine Regelung der vektoriellen Bahngeschwindigkeit. Ueber Bahnbeschleunigungssignale werden die Servoantriebe Koordinaten-bezogen angesteuert. In der Summe der Massnahmen ergibt sich eine besonders effektive und schnell wirkende Prozessregelung, die ohne Einschränkung auch für die Bearbeitung sehr grosser Werkstücke geeignet ist. Schwingungen der Maschine oder andere unerwünschte Nebeneffekte während des Erosionsvorganges treten nicht mehr auf, da ihren Ursachen automatisch, also ohne Eingreifen einer Bedienungsperson, frühzeitig und damit wirkungsvoll entgegengewirkt wird.

Auf besonders vorteilhafte Weise werden die von Werkstückund Werkzeugelektrode ausgehenden Druckkräfte mit Hilfe geeigneter Sensoren an denjenigen Stellen der Funkenerosionsmaschine gemessen, an denen Deformationen kritischer Maschinenteile zu erwarten sind. Die genaue Lage solcher Stellen an der Maschine ist bauartbedingt und kann sich bei wechselnden Lasten oder bei Aenderung der Zustellgeschwindigkeit der Elektrode verlagern. Entsprechend ist die Art der Kraftmess-Sensoren an die Art und Lage der jeweiligen Messstelle angepasst.

Als Messfühler eignen sich insbesondere Drucksensoren, wie Dehnungsmessstreifen. Die Kräfte können auch indirekt an besonders empfindlichen Stellen der Maschine gemessen werden, z.B. durch Strommessung an dem Zustellservo der Elektrode oder durch Torsionsmessung an der Verstellspindel für die Elektrode.

Diese Art der Messwerterfassung berücksichtigt die tatsächliche Druckbelastung an denjenigen Teilen der Maschine, welche die Präzision der Verstell-Führungen mit beeinflussen, so dass sich ausser den zuvor erwähnten Vorteilen eine bessere Gesamtstabilität der Maschine mit engerem Bearbeitungstoleranzen am Werkstück ergibt.

Im folgenden werden Einzelheiten der Erfindung anhand bevorzugter Ausführungsbeispiele mit Hilfe der Zeichnungen näher erläutert.

Es zeigen:

Fig. 1 die Seitenansicht auf die wesentlichen Teile einer Funkenerosionsmaschine,

Fig. 2 das Blockschaltbild einer Signalverarbeitungsanlage, die dem allgemeinen Prozessregler zugeordnet ist, zur Verarbeitung von Druckmess-Signalen, und

Fig. 3 das Zeitdiagramm zur Erklärung der Wirkungsweise der Anlage nach Fig. 2.

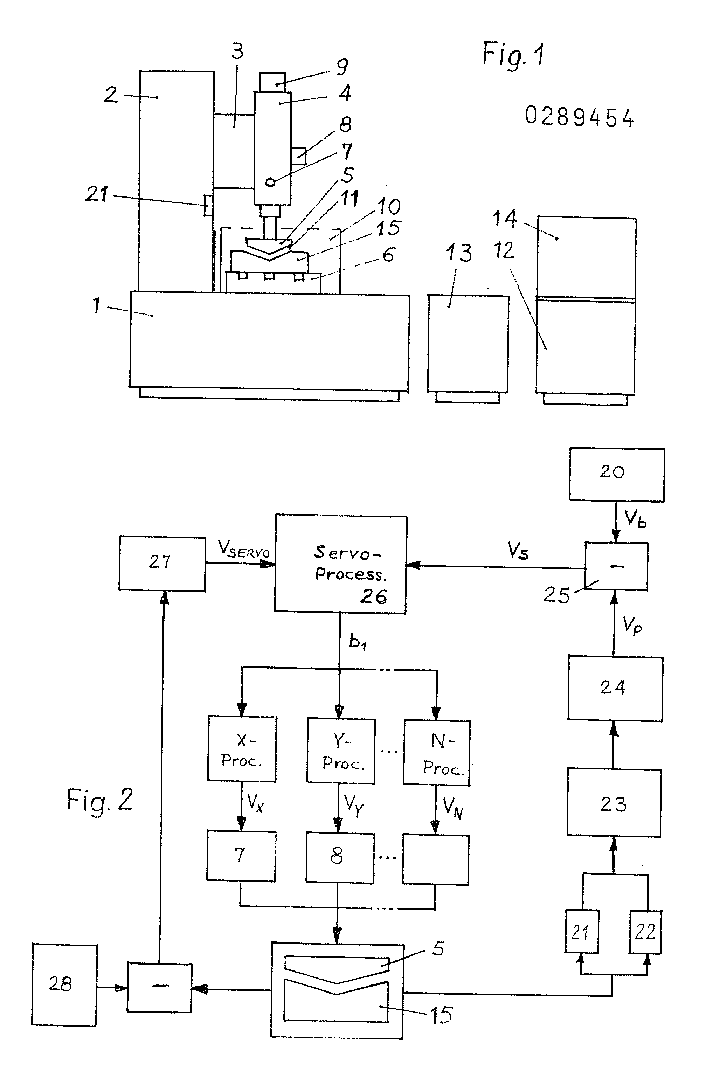

Figur 1 zeigt in Prinzipdarstellung eine Funkenerosionsmaschine in der traditionellen Bauweise, mit einem Bett 1, einem Ständer 2 und einem am Ständer angebrachten Kopf 3. Am Kopf befindet sich eine vertikal verstellbare Pinole 4, an deren unterem Ende eine Werkzeugelektrode 5, z.B. über einen zentrierenden Schnellverschluss befestigt ist. Anstelle eines mit dem Bett 1 starr verbundenen Ständers 2 kann auch der Ständer mit daran befestigter Pinole vertikal verstellbar sein. Zur Koordinaten-gesteuerten Verstellung der Elektrode sind ein X-Antrieb 7, ein Y-Antrieb 8 und ein Z-Antrieb 9 vorgesehen, welche servo-gesteuert verstellbar sind. X- und Y-Antrieb können je nach Bauart der Maschine die Werkzeugelektrode 5 oder das Werkstück 15 betreffen.

Verbunden mit dem Bett 1 ist ein absenkbarer, also vertikal verfahrbarer Tisch 6. Auf dem Tisch befindet sich das als Gegenelektrode wirkende Werkstück 15. Der Tisch 6 ist von einem Dielektrikum-Behälter 10 eingeschlossen, in welchen Werkstück- und Werkzeugelektrode soweit eintauchen, dass sich mindestens der Arbeitsspalt 11 innerhalb der Dielektrikumsflüssigkeit befindet.

Zur vollständigen Maschine gehören ferner ein elektronischer Generator 12, ein an den Dielektrikumsbehälter 10 angeschlossenes Dielektrikum-Aggregat 13 zur Konditionierung und Aufbereitung der Dielektrikum-Flüssigkeit und ein den Bearbeitungsprozess steuernder Prozessregler 14.

Die Weite des Arbeitsspaltes 11 zwischen der Werkzeugelektrode 5 und der Werkstückelektrode 15 spielt eine entscheidende Rolle für den geordneten Ablauf des Funkenerosionsprozesses. Die Spaltbreite wird unter dem Einfluss des Prozessreglers 14 periodisch servogesteuert nachgeregelt.

Die Nachstellung erfolgt durch mechanische Bewegung der Pinole 4 bzw. des Werkstücktisches 6, je nach Bauart der Maschine. Die dazu erforderlichen Zustellbewegungen zwischen den Elektroden werden durch die sich in dem Arbeitsspalt befindende Dielektrikumsflüssigkeit gedämpft. Bei der Vergrösserung des Arbeitsspaltes entsteht ein Vakuum, in welches Dielektrikumsflüssigkeit aus dem Behälter lateral, also längs des Bearbeitungsspaltes nachfliessen muss. Bei Verringerung des Arbeitsspaltes wird umgekehrt Dielektrikumsflüssigkeit aus dem Spalt herausgepresst, wobei sich die Viskositäts-abhängige Dämpfung der Dielektrikumsflüssigkeit gegen die Zustellbewegung der Elektrode auswirkt.

Die dabei auftretenden Kräfte können durchaus in der Grössenordnung von mehreren hundert Kilogramm liegen. Unter dem Einfluss dieser Kräfte deformieren sich Teile der Maschine, insbesondere Teile des Maschinengestells, wodurch sich Bearbeitungsfehler ergeben würden.

Erfindungsgemäss werden solche Fehler durch laufendes Ueberwachen der Kräfte erfasst, die zwischen den Elektroden während der Zustellbewegungen auftreten. Die gemessenen Kräfte werden in geeigneter Form innerhalb der Prozessregelung berücksichtigt. Zu ihrer Erfassung sind ein oder mehrere Messfühler 21 vorgesehen. Sie nehmen die tatsächlich an den Maschinenteilen auftretenden Kräfte entweder direkt auf, oder aber indirekt über die Messung tatsächlich auftretender Deformationen. Je nach Bauart der Maschine werden die Messfühler bzw. Sensoren 21, 22 vorzugsweise an besonders kritischen und messtechnisch gut zugänglichen Bereichen des Maschinengestelles angeordnet.

Als Messfühler können z.B Dehnungsmessstreifen am Maschinengestell vorgesehen sein. Es können aber auch die Kräfte zwischen der Elektrode und der Pinole über dafür geeignete Messfühler, z.B. Druckgeber, erfasst werden. Erfolgt die Zustellung der Elektrode über einen Spindelantrieb, lassen sich mit Hilfe eines Winkelsensors die Torsionsänderungen der Spindel als Messgrösse erfassen. Schliesslich können die Kräfte zwischen den beiden Elektroden auch auf elektrischem Weg erfasst werden, z.B. über eine Messung der Stromänderungen am Zustell-Antriebsmotor 9 für die Zustellelektrode.

Die Ausgangssignale dieser Messfühler werden dem Prozessregler 14 zugeführt und dort zur Korrektur der Prozessregelung unter Einbezug vorprogrammierter Bearbeitungsstrategien verwendet. Abweichungen massgebender Steuergrössen innerhalb der Prozessregelung, die wegen der Komplexität des Erosionsprozesses jederzeit auftreten und unvermittelt zu Störungen im Prozessablauf führen könnten, lassen sich durch die Erfassung der tatsächlich auftretenden Kräfte und ihre Einbeziehung in die Prozessregelung frühzeitig erkennen und weitgehend kompensieren.

Figur 2 zeigt eines von vielen denkbaren Ausführungsbeispielen für die erfindungsgemässe Erfassung von Messwerten der Messfühler und deren Verarbeitung innerhalb des Prozessreglers. In einem Sollwertspeicher 20 sind vorgegebene Werte für Technologie-bedingte Parameter, die z.B. die Geometrie des Werkstücks betreffen. Ein oder mehrere Messfühler 2l, 22 stehen mit einem Prozesskraft-Messsystem 23 in Verbindung, wobei die Messfühler in der zuvor beschriebenen Weise als Indikatoren für die Druckkraft zwischen Werkzeug- und Werkstückelektrode dienen.

Die vom Prozesskraftmesssystem 23 erfassten Kraftmesswerte werden in einem Maximal-Geschwindigkeits-Prozessor 24 unter Berücksichtigung maschinenbezogener Parameter, wie die Zahl der zu steuernden Achsen oder Geschwindigkeiten der elektromechanischen Stellantriebe, zu einem für die weitere Verarbeitung geeigneten Vektorsignal umgewandelt. Dieses wird einer Differenzschaltung 25 zugeführt, welche die Ausgangsfunktion mit derjenigen des Sollwertspeichers 20 verknüpft. Das Ausgangssignal $V_{soll}$ der Differenzschaltung 25 stellt gewissermassen den nachgeführten Sollwert für die folgenden Teile der Prozessregelung dar. Es wird zunächst einem Servoprozessor 26 zugeführt.

Der Servoprozessor 26 erhält ausserdem ein vektorielles Signal $V_{servo}$, welches die für den Erosionsprozess ideale Vorschubgeschwindigkeit darstellt. Dieses Signal wird in einem Zustell-Servo 27 aus den Entladeverhältnissen an der Funkenstrecke und einem Sollwert-Prozessor 28 gebildet.

Der Ausgang des Servo-Prozessors 26 liefert ein vektorielles Signal b1, welches die Bahnbeschleunigung für die ServoAntriebe der Werkstücknachführung im Sinne einer Stellgrösse darstellt. Dieses Signal wird entsprechenden Achsenprozessoren für die X-, Y- und gegebenenfalls weiteren Achsen zugeführt, die aus dem vektoriellen Signal Stellsignale Vx, Vy,.., Vn ableiten. Diese Signale sind auf die jeweilige Stellachse bezogen und werden dem Antriebssystem, also dem X-Antrieb 7, dem Y-Antrieb 8 und gegebenenfalls weiteren Antrieben zugeführt.

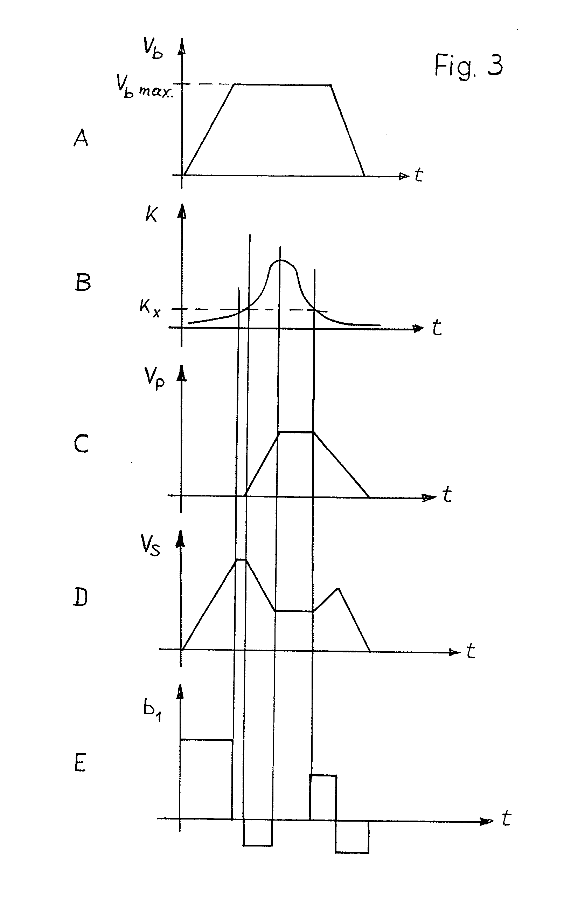

Fig.3 zeigt den Signalverlauf an verschiedenen Punkten der Einrichtung gemäss Fig. 2 während eines Regelvorganges. Der Regelvorgang stellt ein beliebig gewähltes Ausführungsbeispiel dar, um das Prinzip einer Prozessregelung zu zeigen. Je nach den praktisch vorliegenden Verhältnissen und Bedingungen können Einzelheiten des Verfahrens und der Vorrichtung in der Praxis leicht derart abgewandelt werden, dass sich eine optimale Gesamtwirkung des Systems ergibt.

Fig. 3A zeigt den Verlauf einer vorgegebenen Bahn-Sollgeschwindigkeit $V_b$, wie sie im Sollwertspeicher 20 definiert wird. Der Signalverlauf ist durch Technologie-bedingte Parameter, z.B. durch die zu bearbeitende Geometrie bestimmt. Fig. 3B zeigt den vom Prozesskraft-Messsystem 23 aufgenommenen zeitabhängigen Verlauf der Prozesskraft K an der Messstelle. Fig. 3C zeigt den Verlauf der maximalen Prozessgeschwindigkeit $V_p$, wie sie im Maximalen-Geschwindigkeits-Prozessor 24 aus den Signalen des Prozesskraft-Messsystems 23 hergeleitet wird.

Im vorliegenden Beispiel wird die gemessene Kraft K in die maximale Prozessgeschwindigkeit $V_p$ derart umgesetzt, dass bei einer gemessenen Kraft, die grösser oder gleich der in Fig 3B bezeichneten Kraft $K_x$ ist, die maximale Prozessgeschwindigkeit $V_p$ proportional mit der Kraft zunimmt. Wird die gemessene Kraft K kleiner als der vorgegebene Grenzwert $K_x$, so nimmt die maximale Prozessgeschwindigkeit $V_p$ proportional ab.

Fig. 3D zeigt die resultierende Sollgeschwindigkeit $V_s$, welche aus der Ueberlagerung der Technologie-bezogenen maximalen Bahngeschwindigkeit $V_b$ und der von maschinenabhängigen Parametern beeinflussten maximalen Prozessgeschwindigkeit $V_p$ resultiert, wie sie dem Eingang des Servo-prozessors 26 zugeführt wird. Fig. 3E schliesslich zeigt die vom Servo-Prozessor 26 erzeugte Bahnbeschleunigung b1, welche den Achsenprozessoren X, Y, ... N zugeführt wird.

Wird in Abwandlung des beschriebenen Ausführungsbeispiels anstelle von Druckmessfühlern oder zu deren Ergänzung zur Messung der Druckkraft zwischen den Bearbeitungselektroden eine indirekte Messwerterfassung vorgesehen, eignet sich dazu z.B eine Strom-Mess-Schaltung am Zustellservo 27 der Zustell-Elektrode 5 bzw. 15. Die Verararbeitung der Messsignale kann nach dem gleichen Prinzip erfolgen wie im oben dargestellten Ausführungsbeispiel.

Werden die auftretenden Druckkräfte zwischen den Elektroden durch eine oben bereits erwähnte Torsionsmessung an der Verstellspindel der Zustellelektrode gemessen, können auch die Ausgangssignale eines geeigneten Torsionsgebers mit den gleichen Mitteln wie zuvor beschrieben verarbeitet und berücksichtigt werden.

Im Gegensatz zu konventionellen Prozessreglern wird im vorliegenden Fall eine kombinierte Signalverarbeitung des vektoriellen Geschwindigkeitssignals für die Elektrodennachführung vorgenommen. Ein solches vektorielles Geschwindigkeitssignal erlaubt besser als bei bekannten Prozessreglern eine möglichst schnelle und genaue Bahnnachführung.

Die besonders kurze Reaktionszeit einer solchen Signalverarbeitung hat im vorliegenden Fall den grossen Vorteil, dass die in den Messfühlern 21, 22 erfassten Kräfte zwischen den Elektroden sich unmittelbar als Korrektursignale auf das vektorielle Bahnbeschleunigungssignal b1 auswirken, welches schliesslich den Servoantrieben für die Koordinatenachsen zugeführt wird.

Im Ergebnis erlaubt der beschriebene Prozessregler eine bisher nicht gekannte Zuverlässigkeit in der Elektrodennachführung, auch bei extrem grossen Werkstücken und damit grossflächigem Arbeitsspalt. Durch die unmittelbare Korrektur der den Servoantrieben zugeführten Stellgrössen lassen sich gefährlich grosse Kräfte zwischen den Elektroden, welche zu einem gestörten oder unregelmässigen Prozessverlauf führen würden, mit Sicherheit vermeiden.

## Patentansprüche

1. Verfahren zur selbsttätigen Steuerung des Bearbeitungsprozesses in einer Funkenerosionsanlage, mit mindestens einer Werkstückelektrode, mindestens einer Werkzeugelektrode, und einem dazwischen liegenden Arbeitsspalt, wobei mindestens eine der Elektroden über einen Prozessregler (I4) servogesteuert periodisch zugestellt und damit der Arbeitsspalt nachgestellt wird, dadurch gekennzeichnet, dass während der Zustellbewegung die zwischen beiden Elektroden (5,15) auftretenden Druckkräfte (K) gemessen werden und dass die sich ergebenden Messsignale im Prozessregler (14) mit Technologie-bezogenen Verfahrensparametern ($V_b$) und mit der tatsächlichen Zustellgeschwindigkeit ($V_{servo}$) verknüpft werden und dass daraus Stellsignale ($V_x$, $V_y$, $V_n$) für die Servosteuerung der Elektrodennachführung abgeleitet werden.

2. Verfahren nach Anspruch 1, dadurch gekennzeichnet, dass die Druck-Messsignale mit den verfahrensspezifischen Parametern ($V_b$) zu einem vektoriellen Geschwindigkeits-Sollsignal ($V_{soll}$) verknüpft werden, dass die tatsächliche Zustellgeschwindigkeit als Vektorsignal ($V_{servo}$) mit dem Geschwindigkeits-Sollsignal zu einem vektoriellen Bahnbeschleunigungssignal (b1) verarbeitet wird, aus welchem Achsen-bezogene Stellsignale ($V_x$, $V_y$, $V_n$) abgeleitet werden.

3. Funkenerosionsmaschine zur Ausführung des Verfahrens nach Anspruch 1, mit einer Werkstückelektrode (15), einer Werkzeugelektrode (5), mit koordinatenbezogenen Stellantrieben (7-9) für die prozessgesteuerte Elektrodenzustellung und mit einem Prozessregler (14), dadurch gekennzeichnet, dass mindestens ein Druck-Messgeber (21) zur Erfassung der wechselnden Druckkraft zwischen den Elektroden (5, 15) vorgesehen ist, dass sein Ausgang mit einer Verknüpfungsschaltung (25) in Verbindung steht, welcher auch der Ausgang eines Sollwertspeichers (20) für Geometriebezogene Prozessparameter ($V_b$) zugeführt ist, und dass die Ausgangssignale ($V_{soll}$) der Verknüpfungsschaltung (25) einem Servo-Prozessor (26) zugeführt sind, an dessen Eingang ferner ein Messausgang des Zustell-Servo (27) angeschlossen ist, wobei die Ausgangssignale des Servo-Prozessors (26) als Bahnbeschleunigungssignale (b1) den Stellantrieben (7-9) zugeführt sind.

4. Funkenerosionsmaschine nach Anspruch 3, dadurch gekennzeichnet, dass der Druck-Messgeber (21) an Teilen des Maschinenständers (2) oder des Maschinenkopfes (3) angebracht ist, an denen die elastische Deformation während des Betriebes der Maschine am grössten ist.

5. Funkenerosionsmaschine nach Anspruch 3, dadurch gekennzeichnet, dass als Druck-Messgeber (21) eine Strom- oder Leistungsmess-Einrichtung am Zustellservo-Motor (27) der Zustell-Elektrode (5 bzw. 15) vorgesehen ist.

6. Funkenerosionsmaschine nach Anspruch 3, dadurch gekennzeichnet, dass als Druck-Messgeber (21) ein Torsionsgeber an der Verstellspindel der Zustell-Elektrode vorgese-

hen ist.

Fig. 1

0289454

Fig. 2

0289454

Fig. 3